# EUROPÄISCHE PATENTSCHRIFT

(11) **EP 0 340 671 B1**
(45) Veröffentlichungstag und Bekanntmachung des Hinweises auf die Patenterteilung: **13.12.1995**
(21) Anmeldenummer: 89107776.0
(22) Anmeldetag: 28.04.1989
(51) Int. Cl.: B29C 65/06

(54) **Verfahren und Vorrichtung zum Steuern von Maschinenparametern beim Reibungsschweissen**
Process and apparatus for controlling the machine parameters in friction welding
Procédé et appareil pour la commande des paramètres d'une machine de soudage par friction

(30) Priorität: 03.05.1988 DE 3815003
(43) Veröffentlichungstag der Anmeldung: 08.11.1989
(73) Patentinhaber: BRANSON ULTRASCHALL Niederlassung der EMERSON TECHNOLOGIES GmbH & CO., D-63128 Dietzenbach (DE)
(72) Erfinder: Ehrenstein, Gottfried, Prof. Dr. Ing., D-3500 Kassel (DE); Schlarb, Alois, Dipl.-Ing., D-3500 Kassel (DE)
(74) Vertreter: Patentanwälte Hauck, Graalfs, Wehnert, Döring, Siemons

(56) Entgegenhaltungen:
- US-A- 3 678 566
- US-A- 4 067 490
- US-A- 4 348 908
- PLASTVERARBEITER. Bd. 34, Nr. 5, Mai 1983, SPEYER/RHEIN DE Seite 380; 'GEREGELTE ÜBERTRAGUNG DER SCHWEISSENERGIE'
- PLASTICS ENGINEERING. Bd. 43, Nr. 11, November 1987, BROOKFIELD CENTER, CT, USA Seite 46; 'LOW-FREQUENCY LINEAR VIBRATION WELDER'

## Beschreibung

Die Erfindung betrifft ein Verfahren gemäß dem Oberbegriff des Patentanspruchs 1 sowie eine Vorrichtung gemäß dem Oberbegriff des Patentanspruchs 12 zum Steuern von Maschinenparametern beim Reibungsschweißen.

Ein solches Verfahren und eine solche Vorrichtung sind aus der US-A-4 348 908 bekannt.

Beim Reibungsschweißverfahren werden die Fügeteile in einer oszillierenden, translatorischen Relativbewegung solange gegeneinander gerieben, bis der Werkstoff in der Berührungszone aufschmilzt und ein Ineinanderfließen im Berührungsbereich stattfinden kann. Danach wird der Vibrationsvorgang beendet, so daß beim Abkühlen eine stoffschlüssige Verbindung entsteht. Man unterscheidet bei diesem Verfahren die Parameter Fügekraft F, aus der sich der Fügedruck ergibt, sowie die Relativbewegung x der Fügeteile in Reibrichtung. Beide Parameter sind zeitabhängig. Der Fügedruck wird in der Regel konstant gehalten; die Relativbewegung der Fügeteile folgt dagegen etwa einer Sinusschwingung mit einer bestimmten Schwingungsamplitude und Arbeitsfrequenz.

Der gesamte Fertigungsablauf beim Vibrationsschweißen kann zeitlich in mehrere Schritte unterteilt werden, die sich anhand des zeitabhängigen Fügewegverlaufes s verdeutlichen. Zuerst werden die zu verbindenden Fügeteile den Aufnahmen der Maschine zugeführt und dort fixiert. Danach werden beide Fügeteile aufeinander zu bewegt, bis sie sich berühren. Nach einer kurzen Verzögerungszeit unter statischem Kontakt beginnt der Vibrationsvorgang. Anfänglich durch Friktion, dann mehr durch hysteretische Schererwärmung erweicht der Werkstoff. Durch den ausgeübten Fügedruck wird dabei Schmelze in den Schweißwulst gedrückt. Dadurch werden die Fügeteile in z-Richtung aufeinander zu bewegt; der Fügewegs steigt an. Nach einigen Sekunden wird der Vibrationsvorgang abgeschaltet. Das Schweißteil bleibt aber noch kurze Zeit unter Fügedruck, dem sogenannten Haltedruck, damit ein definiertes Erkalten stattfinden kann. Danach wird die Fixierung gelöst und das Schweißteil kann entnommen werden.

Um feste Verbindungen zu erzielen, muß der Werkstoff ausreichend aufgeschmolzen werden und muß ein entsprechender Fügedruck vorhanden sein. In der Praxis wird diesen Forderungen oft dadurch Rechnung getragen, daß ein Mindestfügeweg eingehalten wird. Weiterhin trägt die visuelle Begutachtung hinsichtlich eines gleichmäßigen, gut ausgebildeten Schweißwulstes dazu bei. Dieses Vorgehen kann jedoch lediglich bei einfachen Fügeteilgeometrien, die mit äußerst geringen Toleranzen behaftet sind, zum Ziel führen. Komplizierte Fügeteile weisen dagegen oft innenliegende Fügezonen auf. Zudem ist bei im Spritzguß hergestellten Fügeteilen mit unvermeidbaren Fertigungstoleranzen zu rechnen. Eine aussagefähige optische Begutachtung des Wulstaussehens an der Bauteilaußenseite ist in Verbindung mit einem Mindestfügeweg hier nicht mehr möglich.

Hieraus ergibt sich die der Erfindung zugrundeliegende Aufgabe, ein Verfahren sowie eine Vorrichtung anzugeben, mit der die Parameter beim Reibungsschweißen so gewählt werden können, daß gute Verbindungseigenschaften resultieren und feste Verbindungen reproduzierbar hergestellt werden können.

Die genannte Aufgabe ist bei dem erfindungsgemäßen Verfahren mit den Merkmalen im Patentanspruch 1 gelöst. Vorteilhafte Weiterbildungen des Verfahrens sowie eine erfindungsgemäße Vorrichtung sind in weiteren Ansprüchen gekennzeichnet.

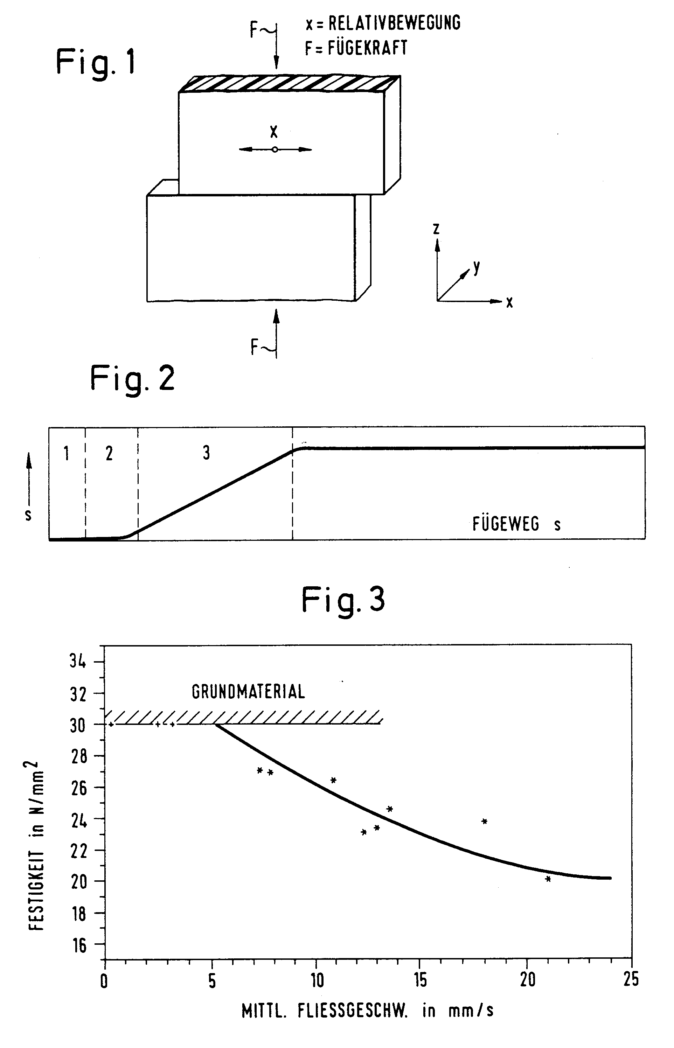

Der zeitliche Verlauf der eingangs erwähnten Parameter, Fügeweg und Schwingungsamplitude unterteilt die Vibrationsphase in drei unterschiedliche Stadien (Figur 2).

Der Fügeweg s zeigt entsprechend zunächst eine erste Phase mit leicht ansteigendem Verlauf. Danach geht er in eine zweite Phase mit progressivem Anstieg über. In der dritten Phase steigt der Fügeweg zeitproportional an, wobei vorausgesetzt ist, daß der Fügedruck konstant ist.

Erfindungsgemäß zeigen sich bei Untersuchungen als Voraussetzung guter Verbindungseigenschaften, daß zumindest folgende Forderung erfüllt sein muß: Die Phase 3 muß während der Vibration erreicht werden.

Verläßt man sich auf die optische Begutachtung der Schweißwulst, so muß damit gerechnet werden, daß während des Vibrationsvorganges an unterschiedlichen Stellen des Bauteils verschiedene Prozeßzustände vorliegen. Während beim Abschalten der Vibration in äußeren Bauteilbereichen die Phase 3 durchaus erreicht sein kann, ist es möglich, daß im Inneren des Bauteils die zu verbindenden Bereiche noch nicht in Kontakt sind. Dazwischen werden sich Fügebereiche einstellen, in denen beim Abschalten gerade die Vibrationsphase 1 oder 2 erreicht war.

Erfindungsgemäß wird während des Vibrationsvorganges zeitabhängig wenigstens einer der charakteristischen Parameter, vorzugsweise der Fügeweg gemessen, um zu ermöglichen, daß die unterschiedlichen Prozeßphasen exakt voneinander getrennt werden können. Insbesondere eignet sich als Indikator für das Erreichen der Phase 3 die zeitliche Ableitung des Fügeweges, also die Fügegeschwindigkeit. In der Phase 3 nimmt nämlich der Fügeweg in erster Näherung linear mit der Zeit zu. Die Ableitung ist somit eine Konstante. Der konstante Wert wird sich dann nur einstellen, wenn in allen Fügeteilberührungsbereichen die Phase 3 erreicht wird.

Die Untersuchungen haben ferner ergeben, daß als Voraussetzung guter Verbindungseigenschaften ergänzend eine zweite Forderung erfüllt sein sollte: In der Phase 3 darf die Fließgeschwindigkeit in der Schmelzeschicht einen kritischen Wert nicht überschreiten. Es läßt sich nämlich ein eindeutiger Zusammenhang zwischen den mechanischen Kennwerten einer Vibrationsschweißverbindung und einer mittleren Fließgeschwindigkeit des aufgeschmolzenen Werkstoffes nachweisen. Über den Schweißprozeß ist diese werkstoffspezifische Fließgeschwindigkeit mit einer definierten Fügegeschwindigkeit verknüpft. Dadurch ist es möglich, die aus dem Fügewegverlauf bestimmbare Fügegeschwindigkeit als Gütekriterium für die Vibrationsschweißverbindung heranzuziehen. Hierzu wird die Fügegeschwindigkeit als Regelgröße während des Schweißprozesses herangezogen, um über den Fügedruck bzw. die Fügekraft, mit der die Fügeteile von einem Antrieb aufeinander zu bewegt werden, die Fügegeschwindigkeit so zu regeln, daß ein bestimmter Sollwert für die Fließgeschwindigkeit nicht überschritten wird.

Die mittlere Fließgeschwindigkeit in der Schweißnaht läßt sich aus der Fügeteilgeschwindigkeit in der Phase 3, der Nahtbreite, der Festkörperdichte, der Schmelzedichte sowie der Fügeteildicke errechnen. Es zeigt sich bei Untersuchungen eine deutliche Abhängigkeit zwischen der mittleren Fließgeschwindigkeit und der Festigkeit, nämlich der Reißfestigkeit bzw. Streckspannung der Verbindung. Hohe Fließgeschwindigkeiten führen zu niedriger Festigkeit. Mit fallender Fließgeschwindigkeit steigt die Festigkeit stetig an. Bei einer bestimmten mittleren Fließgeschwindigkeit werden dann die Festigkeitswerte für das Grundmaterial erreicht. Als Beispiel für den Zusammenhang zwischen Festigkeit und mittlerer Fließgeschwindigkeit dient die Darstellung in Figur 3. Es gilt somit beim Vibrationsschweißen von Polypropylen, die Fließgeschwindigkeit in der Schmelze zu begrenzen. Die Untersuchungen zeigen, daß gute mechanische Eigenschaften mit einer mittleren Schmelzefließgeschwindigkeit von etwa kleiner als 5 mm/s erreicht werden.

Ausführungsbeispiele der Erfindung sind nachstehend anhand der Zeichnung näher erläutert. Es zeigt:
- Figur 1: das Prinzip des linearen Vibrationsschweißens,
- Figur 2: den Verlauf mehrerer Parameter als Funktion der Fügezeit,
- Figur 3: den Zusammenhang zwischen der Verbindungsfestigkeit und der mittleren Fließgeschwindigkeit,
- Figur 4: ein Blockschaltbild einer fügewegkontrollierten Abschalteinrichtung und
- Figur 5: ein Blockschaltbild zur Regelung der Fügegeschwindigkeit.

Die Figuren 1 bis 3 sind bereits im vorstehenden Beschreibungsteil eingehend erläutert worden.

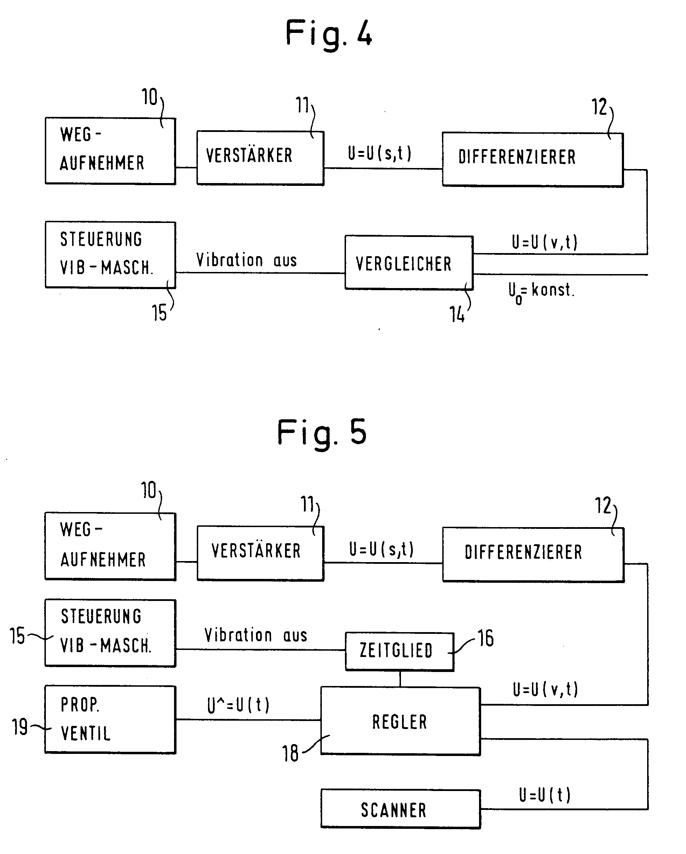

In Figur 4 ist ein Wegaufnehmer 10 an der beweglichen, nicht dargestellten Fügeteilaufnahme einer Schweißmaschine befestigt. Diese Fügeteilaufnahme wird mittels eines hydraulischen Zylinders auf die gehäusefeste Fügeteilaufnahme zu bewegt, woraus sich der Fügeweg s in z-Richtung der Figur 1 ergibt. Von dem Zylinder wird also ein bestimmter Druck ausgeübt, d.h. die Maschine arbeitet kraftgeregelt. Die Signale des Wegaufnehmers 10 werden in einem Verstärker 11 verstärkt und dann einem Differenzierer 12 zugeführt. Das Ausgangssignal des Differenzierers 12 stellt somit die zeitliche Ableitung des Fügeweges s und damit die Fügegeschwindigkeit dar. Dem Differenzierer 12 ist ein Vergleicher 14 nachgeschaltet, in dem die Fügegeschwindigkeitssignale in kurzem zeitlichen Abstand, z.B. in Abständen von 0,1 Sekunden verglichen werden. Folgen dabei mehrere identische Werte aufeinander, so gibt der Vergleicher 14 ein Ausgangssignal "Vibration aus" ab, das über ein Relais 15 die Vibrationsbewegung der Maschine abschaltet. Es ist somit sichergestellt, daß die Phase 3 in allen Verbindungsbereichen der Fügeteile mit Sicherheit erreicht ist.

In Figur 5 ist wiederum der Wegaufnehmer 10, der Verstärker 11 und der Differenzierer 12 dargestellt. Wiederum liefert das Ausgangssignal des Differenzierers 12 eine Aussage, ob die Phase 3 erreicht ist, wenn für die Fügegeschwindigkeit identische Werte ermittelt werden. In diesem Fall wird gemäß Figur 5 die Vibration nicht abgeschaltet, sondern das Ausgangssignal des Differenzierers auf ein Zeitglied 16 gegeben, welche die Vibration zeitverzögert abschaltet.

Während dieser Zeit gelangt das Ausgangssignal des Differenzierers 12 in einen Regler 18 und wird hier mit einem Sollwert für eine mittlere Fließgeschwindigkeit verglichen. Der Ausgang des Reglers 18 wird einem Proportionalventil 19 zugeführt, das die Druckmittelwege des hydraulischen Zylinders an dem beweglichen Aufnahmeteil der Maschine zu einer Druckmittelquelle bzw. einem Tank steuert. Das Proportionalventil 19 wird vom Regler 18 so angesteuert, daß die vom Zylinder ausgeübte Kraft und damit die Fügegeschwindigkeit den eingestellten Sollwert erreicht, aber nicht überschreitet. Nach einer festgelegten Zeit nach dem Regelbeginn schaltet die Maschine über das Zeitglied 16 ab.

Es kann vorteilhaft sein, die Fügekraft während des Schweißvorganges zu verändern, insbesondere in zwei Stufen zu regeln. Beispielsweise wird während der ersten Phase des Vorgangs die Fügekraft verhältnismäßig hoch eingestellt und wird dann in der Phase 3 verringert. Dadurch läßt sich der Schweißvorgang beschleunigen. Außerdem kann es auch vorteilhaft sein, die Schwingungsamplitude zu regeln, um damit Einfluß auf die Fügegeschwindigkeit zu nehmen. Auch hier kann beispielsweise die Amplitude während der ersten Phase erhöht und dann anschließend in der Phase 3 verringert werden. Auch ist zu beachten, daß die Größe des Haltedrucks der Fügeteile während des Erstarrens des aufgeschmolzenen Werkstoffes auf die Schweißgüte einen Einfluß hat. Der Haltedruck soll so gewählt werden, daß die größtmögliche Festigkeit erzielt wird. Beispielsweise sei angegeben, daß der Haltedruck gegenüber dem in Phase 3 erreichten Fügedruck nicht verändert werden soll.

## Patentansprüche

1. Verfahren zum Steuern von Maschinenparametern beim Reibungsschweißen von thermoplastischen Kunststoffen, wobei die Fügeteile in eine oszillierende translatorische Relativbewegung versetzt werden, bis der Kunststoff in der Berührungszone aufschmilzt, und unter Aufbringung einer Fügekraft und Zurücklegen eines Fügeweges aufeinanderzu bewegt werden, worauf nach Beendigen des Vibrationsvorgangs beim Abkühlen eine stoffschlüssige Verbindung entsteht, dadurch gekennzeichnet, daß mindestens einer der zeitabhängigen, für die Fertigung charakteristischen Parameter während des Vibrationsvorgangs gemessen wird und daß nach Erreichen der Prozeßphase, in der ein kontinuierlicher Schmelzefluß in der Schweißwulst herrscht und der Fügeweg in erster Näherung linear mit der Zeit zunimmt, der Vibrationsvorgang beendet wird.

2. Verfahren nach Anspruch 1, dadurch **gekennzeichnet,** daß zur Bestimmung der Prozeßphase der Fügeweg und/oder die Fügegeschwindigkeit gemessen werden.

3. Verfahren nach Anspruch 1 oder 2, dadurch **gekennzeichnet,** daß die Fügegeschwindigkeit beim Zurücklegen des Fügeweges ermittelt wird und nach Erreichen einer konstanten Fügegeschwindigkeit der Vibrationsvorgang beendet wird.

4. Verfahren nach Anspruch 3, dadurch **gekennzeichnet,** daß der Fügeweg gemessen und aus dem Fügeweg in zeitlicher Ableitung die Fügegeschwindigkeit ermittelt wird.

5. Verfahren nach Anspruch 3 oder 4, dadurch **gekennzeichnet,** daß eine konstante Fügegeschwindigkeit durch Vergleich der aus dem Fügeweg ermittelten Fügegeschwindigkeit mit einem Konstantwert festgestellt wird.

6. Verfahren nach einem der Ansprüche 3 bis 5, dadurch **gekennzeichnet,** daß nach Erreichen der konstanten Fügegeschwindigkeit der Vibrationsvorgang verzögert abgeschaltet wird.

7. Verfahren nach Anspruch 6, dadurch **gekennzeichnet,** daß während der Verzögerungszeit der Fügeweg so geregelt wird, daß eine vorbestimmte Fließgeschwindigkeit der Werkstoffschmelze nicht überschritten wird.

8. Verfahren nach Anspruch 7, dadurch **gekennzeichnet,** daß die Regelung des Fügeweges durch die Kraft erfolgt, mit der die Fügeteile aufeinander gedrückt werden.

9. Verfahren nach Anspruch 8 in Verbindung mit einem der Ansprüche 1 bis 7, dadurch **gekennzeichnet,** daß die Fügekraft während des Schweißvorganges zweistufig geregelt wird.

10. Verfahren nach einem der Ansprüche 1 bis 9, dadurch **gekennzeichnet,** daß die Schwingungsamplitude während des Schweißvorganges geregelt wird.

11. Verfahren nach einem der Ansprüche 1 bis 10, dadurch **gekennzeichnet,** daß der Haltedruck beim Erstarren des aufgeschmolzenen Werkstoffes so eingestellt wird, daß die größtmögliche Festigkeit der Schweißung erzielt wird.

12. Vorrichtung zum Durchführen des Verfahrens nach einem der Ansprüche 1 bis 11, mit einer Vibrationsschweißmaschine, dadurch **gekennzeichnet**, daß zur Messung des Fügeweges ein Wegaufnehmer (10) vorgesehen ist, an den ein Differenzierer (12) und ein Vergleicher (14) angeschlossen sind, in dem das Signal aus dem Differenzierer mit einem Konstantwert verglichen wird.

13. Vorrichtung nach Anspruch 12, dadurch **gekennzeichnet,** daß an den Vergleicher (14) ein Regler (18) angeschlossen ist, der nach Erreichen der konstanten Fügegeschwindigkeit durch Vergleich mit einem Sollwert eine Regelung der Fügegeschwindigkeit durchführt und daß der Vibrationsvorgang über ein Zeitglied (16) beendet wird.

14. Vorrichtung nach Anspruch 13, dadurch **gekennzeichnet,** daß der Reglerausgang auf ein Stellglied (19) für einen Antrieb in Fügerichtung geführt wird.

## Claims

1. A method for controlling certain machine parameters in friction welding of thermoplastic materials, wherein the members to be joined are subjected to an oscillating translational relative motion until the plastic material melts in the contact zone, displacing said members towards each other along a joining distance while applying a joining force, whereupon after terminating the vibration an integral welding connection is obtained during cooling, characterized in that at least one of the time-dependent parameters which is characteristic for the process is measured during the vibration and that the vibration is terminated after reaching the process phase in which the melting flow in the melting zone is continuous and in which the displacement approximately increases linear with time.

2. The method of claim 1, characterized in that the displacement distance and/or the joining velocity is measured for determining the process phase.

3. The method of claim 1 or 2, characterized in that the joining velocity is determined while the members are being displaced and that the vibration is terminated after reaching a constant joining velocity.

4. The method of claim 3, characterized in that the displacement distance is measured and the joining velocity is calculated by differentiating the distance.

5. The method of claim 3 or 4, characterized in that a constant joining velocity is determined by comparing the joining velocity determined from the displacement distance and a constant value.

6. The method of one of claims 3 to 5, characterized in that the termination of the vibration is delayed after attaining the constant joining velocity.

7. The method of claim 6, characterized in that during the time delay the displacement distance is controlled such that a predetermined flow velocity of the melt is not exceeded.

8. The method of claim 7, characterized in that controlling the displacement distance is performed by the force with which the members to be joined are pressed together.

9. The method of claim 8 in combination with one of claims 1 to 7, characterized in that the joining force is controlled in two steps during the melting process.

10. The method of one of claims 1 to 9, characterized in that the vibrational amplitude is controlled during the melting process.

11. The method of one of claims 1 to 10, characterized in that the holding pressure on the members during solidification of the molten material is adjusted such that the highest possible strength of the welding process is being attained.

12. An apparatus for performing the method of one of claims 1 to 11, comprising a vibration welding machine, characterized in that a displacement transducer (10) is provided for measuring the displacement distance to which transducer a differentiating circuit (12) and a comparing circuit (14) are connected, in which the signal from the differentiating circuit is compared with a constant value.

13. The apparatus of claim 12, characterized in that the comparing circuit (14) is connected to a control (18) for controlling the joining velocity by comparing with a desired value after attaining the constant joining velocity and that the vibration is terminated via a time circuit (16).

14. The apparatus of claim 13, characterized in that the output of the control is supplied to an actuating means (19) for a displacement drive means.

## Revendications

1. Procédé pour commander des paramètres d'une machine de soudage par friction de matériaux thermoplastiques,
selon lequel on soumet les pièces destinées à être jointes à un mouvement relatif oscillant de translation jusqu'à ce que la matière plastique fonde dans la zone de contact,
et on les déplace l'une vers l'autre avec application d'une force de jonction, et déplacement selon un trajet de jonction après quoi, après l'arrêt de la phase de vibrations, il se produit une liaison par pénétration de matière lors du refroidissement,
caractérisé
- en ce qu'on mesure au moins l'un des paramètres fonction du temps, caractéristiques pour l'opération, pendant la phase des vibrations, et
- en ce que, lorsqu'est atteinte la phase du procédé au cours de laquelle règne un flux continu de matière fondue dans les lèvres de la soudure et au cours de laquelle la course de rapprochement du joint croît, en première approximation, linéairement avec le temps, la période des vibrations est arrêtée.

2. Procédé suivant la revendication 1, caractérisé en ce que, pour déterminer la phase du procédé, on mesure la course de rapprochement et/ou la vitesse de rapprochement.

3. Procédé suivant la revendication 1 ou la revendication 2, caractérisé en ce qu'on détermine la vitesse de rapprochement lors du parcours de la course de rapprochement et, après qu'on a atteint une vitesse de rapprochement constante, on arrête la phase des vibrations.

4. Procédé suivant la revendication 3, caractérisé en ce qu'on mesure la course de rapprochement et, à partir de la course de rapprochement, on détermine la vitesse de rapprochement dans une dérivation par rapport au temps.

5. Procédé suivant la revendication 3 ou la revendication 4, caractérisé en ce qu'on détermine l'existence d'une vitesse de rapprochement constante en comparant la vitesse de rapprochement déterminée à partir de la course de rapprochement à une valeur constante.

6. Procédé suivant l'une des revendications 3 à 5, caractérisé en ce qu'après avoir obtenu la vitesse de rapprochement constante, la phase des vibrations est arrêtée progressivement.

7. Procédé suivant la revendication 6, caractérisé en ce que, pendant le temps d'arrêt progressif, la course de rapprochement est réglée de façon à ce que la vitesse d'écoulement de la matière en fusion ne dépasse pas une valeur prédéfinie .

8. Procédé suivant la revendication 7, caractérisé en ce que la régulation de la course de rapprochement est effecuée au moyen de la force avec laquelle on rapproche l'une de l'autre les pièces destinées à être jointes.

9. Procédé suivant la revendication 8 en liaison avec l'une des revendications 1 à 7, caractérisé en ce que la force de rapprochement pendant l'opération de soudage est réglée en deux étapes.

10. Procédé suivant l'une des revendications 1 à 9, caractérisé en ce qu'on règle l'amplitude des oscillations pendant l'opération de soudage.

11. Procédé suivant l'une des revendications 1 à 10, caractérisé en ce que la pression de maintien pendant la solidification de la matière en fusion est réglée de telle façon que l'on obtienne la résistance la plus grande possible de la soudure.

12. Dispositif pour la mise en oeuvre du procédé suivant l'une des revendications 1 à 11 sur une machine de soudage par vibrations, caractérisé en ce qu'il est prévu, pour mesurer la course de rapprochement, un détecteur de course (10), auquel sont raccordés un appareil de dérivation (12) et un comparateur (14), dans lequel le signal provenant de l'appareil de dérivation (12) est comparé à une valeur constante.

13. Dispositif suivant la revendication 12, caractérisé en ce qu'au comparateur (14) , est raccordé un régulateur (18) qui, après que la vitesse de rapprochement constante a été atteinte, effectue le réglage de la vitesse de rapprochement par comparaison avec une valeur de consigne, et en ce que la phase des vibrations est arrêtée au moyen d'un organe de temporisation (16).

14. Dispositif suivant la revendication 13, caractérisé en ce que la sortie du régulateur est envoyée à un organe de commande (19) de l'entraînement dans la direction du rapprochement.
